# EUROPEAN PATENT SPECIFICATION

(11) **EP 1 597 428 B1**
(45) Date of publication and mention of the grant of the patent: **21.01.2015**
(21) Application number: 03779347.8
(22) Date of filing: 28.10.2003
(51) Int. Cl.: D21F 1/00

(54) **ON-MACHINE-SEAMABLE INDUSTRIAL FABRIC COMPRISED OF INTERCONNECTED RINGS**
NAHTBARES TECHNISCHES GEWEBE BESTEHEND AUS MITEINANDER VERBUNDENEN RINGEN
TISSU INDUSTRIEL POUVANT ETRE ASSEMBLE EN MACHINE ET ETANT CONSTITUE D'ANNEAUX INTERCONNECTES

(30) Priority: 13.11.2002 US 293818
(43) Date of publication of application: 23.11.2005
(60) Divisional application: 11160687.7
(73) Proprietor: ALBANY INTERNATIONAL CORP., Rochester, NH 03867 (US)
(72) Inventor: HANSEN, Robert, A., 70599 Stuttgart-Birkach (DE)
(74) Representative: Bugnion Genève
(86) International application number: PCT/US2003/034130
(87) International publication number: WO 2004/044310

(56) References cited:
- EP-A- 0 658 649
- WO-A-99/16966
- GB-A- 1 598 698
- US-A- 4 469 221
- US-A- 4 502 595
- US-A- 4 857 391
- US-A- 5 006 399
- US-A- 5 810 159
- US-B1- 6 402 895

## Description

### Background of the Invention

### 1. Field of the Invention

The present invention relates to the papermaking and related arts. More specifically, the present invention is an industrial fabric of the on-machine-seamable variety, such as an on-machine-seamable press fabric for the press section of a paper machine.

### 2. Description of the Prior Art

During the papermaking process, a cellulosic fibrous web is formed by depositing a fibrous slurry, that is, an aqueous dispersion of cellulose fibers, onto a moving forming fabric in the forming section of a paper machine. A large amount of water is drained from the slurry through the forming fabric, leaving the cellulosic fibrous web on the surface of the forming fabric.

The newly formed cellulosic fibrous web proceeds from the forming section to a press section, which includes a series of press nips. The cellulosic fibrous web passes through the press nips supported by a press fabric, or, as is often the case, between two such press fabrics. In the press nips, the cellulosic fibrous web is subjected to compressive forces which squeeze water therefrom, and which adhere the cellulosic fibers in the web to one another to turn the cellulosic fibrous web into a paper sheet. The water is accepted by the press fabric or fabrics and, ideally, does not return to the paper sheet.

The paper sheet finally proceeds to a dryer section, which includes at least one series of rotatable dryer drums or cylinders, which are internally heated by steam. The newly formed paper sheet is directed in a serpentine path sequentially around each in the series of drums by a dryer fabric, which holds the paper sheet closely against the surfaces of the drums. The heated drums reduce the water content of the paper sheet to a desirable level through evaporation.

It should be appreciated that the forming, press and dryer fabrics all take the form of endless loops on the paper machine and function in the manner of conveyors. It should further be appreciated that paper manufacture is a continuous process which proceeds at considerable speeds. That is to say, the fibrous slurry is continuously deposited onto the forming fabric in the forming section, while a newly manufactured paper sheet is continuously wound onto rolls after it exits from the dryer section.

Referring, for the moment, specifically to press fabrics, it should be recalled that, at one time, press fabrics were supplied only in endless form. This is because a newly formed cellulosic fibrous web is extremely susceptible to marking in the press nip by any nonuniformity in the press fabric or fabrics. An endless, seamless fabric, such as one produced by the process known as endless weaving, has a uniform structure in both its longitudinal (machine) and transverse (cross-machine) directions. A seam, such as a seam which may be used to close the press fabric into endless form during installation on a paper machine, represents a discontinuity in the uniform structure of the press fabric. The use of a seam, then, greatly increases the likelihood that the cellulosic fibrous web will be marked in the press nip.

For this reason, the seam region of any workable on-machine-seamable press fabric must behave under load, that is, under compression in the press nip or nips, like the rest of the press fabric, and must have the same permeability to water and to air as the rest of the press fabric, in order to prevent the periodic marking of the paper product being manufactured by the seam region.

Despite the considerable technical obstacles presented by these requirements, it remained highly desirable to develop an on-machine-seamable press fabric because of the comparative ease and safety with which such a fabric could be installed on the press section. Ultimately, these obstacles were overcome with the development of press fabrics having seams formed by providing seaming loops on the crosswise edges of the two ends of the fabric. The seaming loops themselves are formed by the machine-direction (MD) yarns of the fabric. The seam is closed by bringing the two ends of the press fabric together, by interdigitating the seaming loops at the two ends of the fabric, and by directing a so-called pin, or pintle, through the passage defined by the interdigitated seaming loops to lock the two ends of the fabric together. Needless to say, it is much easier and far less time-consuming to install an on-machine-seamable press fabric, than it is to install an endless press fabric, on a paper machine.

One method to produce a press fabric that can be joined on the paper machine with such a seam is to flat-weave the fabric. In this case, the warp yarns are the machine-direction (MD) yarns of the press fabric. To form the seaming loops, the warp yarns at the ends of the fabric are turned back and woven some distance back into.the fabric body in a direction parallel to the warp yarns. Another technique, far more preferable., is a modified form of endless weaving, which normally is used to produce an endless loop of fabric. In modified endless weaving, the weft, or filling, yarns are continuously woven back and forth across the loom, in each passage forming a loop on one of the edges of the fabric being woven by passing around a loop-forming pin. As the weft yarn, or filling yarn, which ultimately becomes the MD yarn in the press fabric, is continuous, the seaming loops obtained in this manner are stronger than any that can be produced by weaving the warp ends back into the ends of a flat-woven fabric.

It should be noted that the bending of the yarn back to create the loop, particularly about a small radius, can result in undesired stresses in the yarn portion creating the loop. This results in weakening the yarns at the seam such that they may fail before the yarns in the body, which is undesirable.

In still another technique, an on-machine-seamable multiaxial press fabric for the press section of a paper machine is made from a base fabric layer assembled by spirally winding a fabric strip in a plurality of contiguous turns, each of which abuts against and is attached to those adjacent thereto. The resulting endless base fabric layer is flattened to produce first and second fabric plies joined to one another at folds at their widthwise edges. Crosswise yarns are removed from each turn of the fabric strip at the folds at the widthwise edges to produce seaming loops. The first and second fabric plies are laminated to one another by needling staple fiber batt material therethrough. The press fabric is joined into endless form during installation on a paper machine by directing a pintle through the passage formed by the interdigitation of the seaming loops at the two widthwise edges.

In each case, spiral seaming coils may be attached to the seaming loops at the ends of the fabric by interdigitating the individual turns of a spiral seaming coil with the seaming loops at each end of the fabric and by directing a pintle through the passage formed by the interdigitated yarns and seaming loops to join the spiral seaming coil to the end of the fabric. Then, the fabric may be joined into the form of an endless loop by interdigitating the individual turns of the seaming coils at each end of the fabric with one another, and by directing another pintle through the passage formed by the interdigitated seaming coils to join the two ends of the fabric to one another.

A final step in the manufacture of an on-machine-seamable press fabric is to needle one or more layers of staple fiber material into at least the outer surface thereof. The needling is carried out with the press fabric joined into the form of an endless loop. The seam region of the press fabric is covered by the needling process to ensure that that region has permeability properties as close as possible to those of the rest of the fabric. At the conclusion of the needling process, the pintle which joins the two ends of the fabric to one another is removed and the staple fiber material in the seam region is cut to produce a flap covering that region. The press fabric, now in open-ended form, is then crated and shipped to a paper-manufacturing customer.

In the course of the needling process, the press fabric inevitably suffers some damage. This is because the barbed needles, which drive individual fibers of the staple fiber material into and through the press fabric, also encounter and break or weaken the yarns of the press fabric itself. And, when the seam region of the press fabric is being needled, at least some of the MD yarns which form the seaming loops and, if present, the spiral seaming coils will be somewhat weakened. Damage of this type inevitably weakens the seam as a whole and can lead to seam failure. In this regard, it should be realized that, in the case of a spiral seaming coil, only a small amount of damage could lead to premature seam failure. Because a spiral seaming coil extends transversely across the fabric at the seam region, a break at any point can weaken the seam for a considerable portion of its length, and cause it to unzip or come apart.

In addition to press fabrics, many other varieties of industrial fabric are designed to be closed into endless form during installation on some equipment. For example; papermaker's dryer fabrics may be joined into the form of an endless loop during installation on a dryer section. Dryer fabrics may be so joined with either a pin seam or a spiral seam, seams which are similar to those described above. Other industrial fabrics, such as corrugator belts, pulp-forming fabrics and sludge-dewatering belts, are seamed in similar fashions and are susceptible to seam failure for the same reasons.

Moreover, spiral seaming coils are available in only a limited number of configurations. That is to say, they may only be obtained in a limited number of diameters and pitches (number of turns per unit length). Clearly, an alternative to spiral seaming coils would be greatly appreciated by industrial fabric designers.

A papermaker's "link belt" fabric is disclosed in PCT/US98/05908 and comprises hinge wires extending in the cross-machine direction and a plurality of ring link elements extending in the machine direction. Each ring link element opens in the cross-machine direction and encloses at least two of the hinge wires. The ring link elements may either be solid, or continuous, or split, the latter being used, preferably, to make repairs in a damaged belt. This publication also includes descriptions of two methods for manufacturing the paper machine belts.

U.S. Patent No. 4,469,221 discloses a papermaker's fabric comprising pintles extending in a cross machine direction and links snapped onto the pintles so that the links extend in a machine direction. Variously shaped link elements are shown. Each link element has holes at its ends for accepting neighboring hinge wires. The holes are not closed completely, but rather are slit to permit them to be expanded and snapped around the hinge wires.

The link belts disclosed in PCT/US98/05908 and U.S. Patent No. 4,469,221 have the ring link elements only oriented in the machine direction, and not in the cross-machine direction. Further, the hinge wires are only shown to extend in the cross-machine direction, and not in the machine or diagonal directions. With such limited configurations, fabric strength and resistance to needling damage are compromised.

GB 1 598 698 discloses a clipper seam for jointing fabric ends and has particular reference to seam for joining together of the ends of paper machine dryer felt so as to make endless felt.

US 5 810 159 discloses a link conveyor, in particular, for paper-making machines, that has hinged wires that extend in the lateral direction and link elements that extend in the longitudinal direction and that in each case enclose at least two hinged wires, while link elements are shifted over the widths of the link conveyor, in the longitudinal direction, by at least one hinged wire.

WO 99/16966 discloses a paper machine belt comprising hinge wires extending in the cross machine direction and a plurality of ring link elements, each of which extends in the machine direction and encloses at least two of the hinge wires.

US 6 402 895 discloses a dewatering belt, in particular as a drying screen for paper machines, which is assembled from a plurality of plate-shaped planar elements that, in order to adjust the permeability, have passthrough openings and/or leave gaps between them, the planar elements being coupled to one another, by way of flexible connecting cords which pass through the planar elements, in such a way that the longitudinal forces acting on the dewatering belt during operation act on them. The dewatering belt is characterized in that the connecting cords extend in the longitudinal direction of the dewatering belt and are anchored at their ends in end pieces which can be coupled to one another.

EP 0 658 649 discloses a belt for a long nip press which is constructed of a nonwoven spiral-type base or carrier which is coated with a solidified urethane coating material. The urethane coating is at least coextensive with the upper and lower surfaces of the spiral-type base, and at least one surface of the coating is preferably spaced above a surface of the base so as to embed the base within the coating. The coating solidifies to form a unitary endless belt with the base embedded therewithin.

US 4 502 595 discloses a link conveyor which includes a first set of helical coils or spirals connected together in interdigitated parallel disposition to define a base structure providing adequate strength and dimensional stability in the conveyor and a second set of interdigitated helical coils or spirals connected together and to the base structure and forming a supplementary structure for protecting the said base structure against damage or undue wear. The base and supplementary structures may be arranged to form a single layer conveyor or may comprise two separate plies connected together by support coils to define a Duplex structure. The conveyor is of particular application to papermachine clothing suitable for dryer fabrics, forming fabrics and base structures for press felts.

The present invention addresses the shortcomings in the prior art by providing an on-machine-seamable fabric having improved strength and resistance to needling damage.

### Summary of the Invention

The present invention relates to an on-machine-seamable industrial fabric according to claim 1. According to the present invention the industrial fabric is manufactured from preformed rings. The rings may be of any shape, including, but not limited to, circular, oval, rectangular, oblong and tetrahedral, and are connected with joining members such as yarns, pintles or wires to form a flat fabric, whose ends may be joined to one another to form a continuous loop. According to the invention, the rings, oriented in the machine direction, are connected by the joining members running at an oblique angle, that is, diagonally, relative to the machine direction.

The rings may be manufactured from rigid materials, and may have a solid, homogeneous nature. Alternatively, the rings may be filaments or copolymers, may be of metallic and/or non-metallic materials, and may be either flexible or inflexible. They may be solid, or open at one end and closable by way of a snap. They may also have preformed caps that provide a flatter pressure distribution along their surface. They may further have a hole at each end for the pintles used to connect them to one another. Other materials may be inserted within the rings to reduce the air or liquid permeability, to equalize the differences in permeability between land and open areas, and to help support the rings from deformation within a press.
Several methods of manufacturing the fabric are also described herein.

The present invention eliminates the capital-intensive weaving looms needed for the manufacture of a woven fabric that provides the body of the papermaker's fabric, offers improved strength over spirals used to provide loops that are used in the seaming of the product, provides the ability to create stock that may easily be seamed together to form the finished product, and improves uniformity of the entire structure by eliminating the fundamental difference between the body of the fabric and the seam area.

The present invention will now be described in more complete detail, with reference being made to the figures identified below.

### Brief Description of the Drawings

Figure 1 is a schematic perspective view of a first embodiment of the industrial fabric of the present invention.
Figure 2 is a schematic perspective view of an industrial fabric which is not part of the present invention.
Figure 3 is a schematic perspective view of rings included in the industrial fabric of the present invention.

### Detailed Description of the Preferred Embodiments

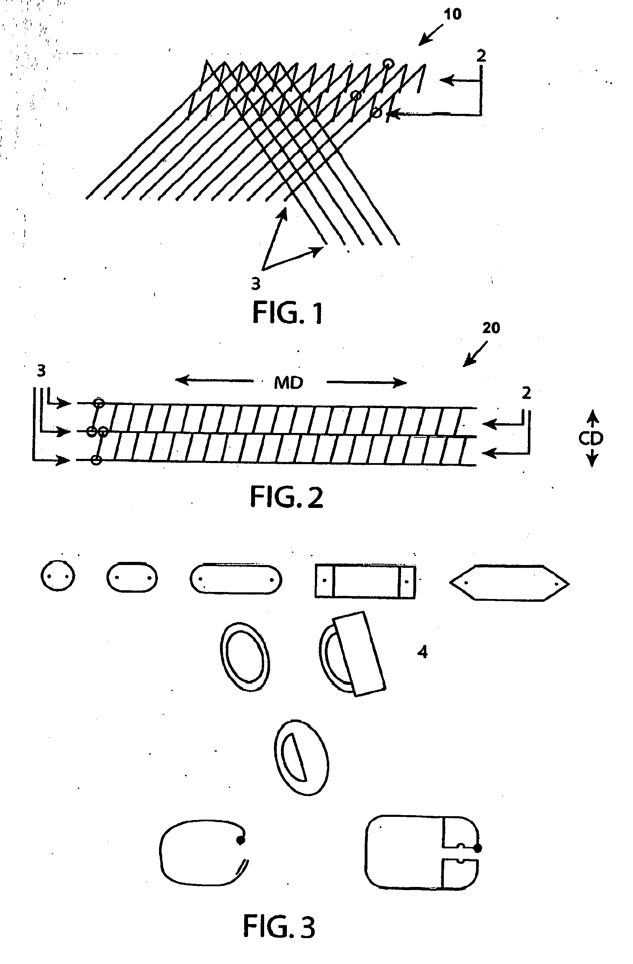

Turning now specifically to the figures, which incidentally are not drawn to scale but rather to illustrate the invention and the components thereof, Figure 1 is a schematic perspective view of a first embodiment of an on-machine-seamable industrial fabric. The fabric 10 takes the form of an endless loop once its two ends have been joined to one another.

In such embodiment, the industrial fabric 10 is comprised of a plurality of preformed rings 2. The rings 2 are oriented in the machine direction and connected by, for example, yarns (or alternatively, pintles or wires) 3, running at oblique angles, that is, diagonally, relative to the machine direction.

Figure 2 is a schematic perspective view of an embodiment of an industrial fabric 20 which is not part of the present invention. In this embodiment, the rings 2 are oriented in the cross machine direction and connected by yarns 3 extending in the machine direction.

Both Figures 1 and 2 show the industrial fabric constructed as a single layer of rings. However, such construction is shown as an example only, and the industrial fabric may also have two-, three- or higher number layers of rings, or may be laminated and include several fabric layers. In the latter case, where the fabric is laminated and includes several fabric layers, one or more, including all, of the fabric layers may be on-machine-seamable, and may be made so in accordance with the present invention.

The industrial fabric as described above could be produced without further "treatments." Or, in the case where the industrial fabric is, for example, a press fabric, it may be needled with one or more layers of staple fiber batt material on one or both sides, or may be coated in some manner.

More specifically, staple fiber may be needled into all portions of the industrial fabric in order to mask the body of the fabric, increase stability, and provide a finer surface for improved pressure distribution. The staple fibers may be of any polymeric resin used in the production of paper machine fabrics and other industrial process fabrics, but are preferably of the group including polyamide and polyester resins.

As noted, the industrial fabric may also include coatings on either or both of its two surfaces of polymeric resins, such as polyurethanes or polyamides, applied by methods known in the art, such as full width coating, dip coating and spraying.

Alternatively, the industrial fabric may be used on one of the other sections of a paper machine, that.is, on the forming or drying sections, or as a base for a polymeric-resin-coated, paper-industry process belt (PIPB). Moreover, the industrial fabric may be used as a corrugator belt or as a base thereof; as a pulp-forming fabric, such as a double-nip-thickener belt; or as other industrial process belts, such as sludge-dewatering belts.

Where yarns are used to join the rings, they may each be of any of the yarn types used in paper machine fabrics or other industrial process fabrics. That is to say, monofilament yarns, which are monofilament strands used singly, or plied/twisted yarns, in the form of plied monofilament or plied multifilament yarns, may be used as either of these yarns.

Further, the filaments comprising the yarns may be extruded from synthetic polymeric resin materials, such as polyamide and polyester, or are metal wire, and incorporated into yarns according to techniques well-known in the industrial textile fabrics industry and particularly in the papermaking clothing industry.

Where pintles are instead used to join the rings, each pintle may be a single strand of monofilament; multiple strands of.monofilament; multiple strands of monofilament untwisted about one another, or plied, twisted, braided or knitted together; or of any of the other pintle types used in paper machine clothing. The pintle may be of metal wire or extruded from synthetic polymeric resin materials.

As shown in Fig. 3, the rings can have any one of several shapes, such as, for example, circular, oval (elliptical), oblique, oblong, tetrahedral or D-shaped. The material from which the rings are fashioned may be of circular, oval (elliptical), square, rectangular or other cross-sectional shapes, and may have diameters in the range from 0.15 mm to 1.0 mm.

The rings may be manufactured from rigid materials, and may have a solid, homogeneous nature. The rings may be metal or extruded from any of the polymeric resin materials being used for yarns in the industrial textile fabrics industry (e.g., polyamides, polyurethanes, polyketones or polyesters). The rings can be flexible or inflexible. The rings may be solid, or open at one end and mechanically closed at the other by way of, for example, a snap interlock or clamp. The rings may further have a hole at each end to receive, for example, elongated pintles used to connect them to one another. Incidentally, joining the rings in this fashion allows them to pivot on each end, providing the fabric with added flexibility and strength.

The rings could also utilize a preformed cap 4 on one or both sides of the ring that provides a flatter pressure difference across the surface of the ring. The cap 4 could be permeable or impermeable. The rings may be monofilament, plied/twisted filaments or braided filaments. Any of these may be coated with an additional polymeric resin material.

Void volume, if desired, may be provided by the open area included within the fabric structure formed by the rings. Other materials may be inserted in the open areas to reduce the air or liquid permeability, to equalize the differences in permeability between land and open areas, and to help support the rings from deformation within a press. Further, the rings and pintles themselves may be made porous, having, for example, flow-through voids through their solid portions.

Modifications to the above would be obvious to those of ordinary skill in the art, but would not bring the invention so modified beyond the scope of the appended claims.

## Claims

1. An on-machine-seamable industrial fabric (10) comprising:
a plurality of joining members (3) ; and
a plurality of preformed rings (2) oriented in a machine direction, each ring enclosing at least two of the joining members,
**characterized by** said joining members extending at oblique angles relative to said machine direction.

2. An on-machine-seamable industrial fabric as claimed in claim 1 wherein the joining members are selected from a group comprising pintles, yarns and wires.

3. An on-machine-seamable industrial fabric as claimed in one of previous claims comprising one or more fabric layers to form a laminate.

4. An on-machine-seamable industrial fabric as claimed in one of previous claims further comprising at least one layer of staple fiber material attached to said fabric.

5. An on-machine-seamable industrial fabric as claimed in one of previous claims wherein said fabric is coated with a polymeric coating.

6. An on-machine-seamable industrial fabric as claimed in claim 5 wherein said coating is selected from a group comprising polyurethanes and polyamides.

7. An on-machine-seamable industrial fabric as claimed in claim 1 wherein said fabric is impregnated with a polymeric resin.

8. An on-machine-seamable industrial fabric as claimed in claim 7 wherein the resin is selected from a group comprising polyurethanes and polyamides.

9. An on-machine-seamable industrial fabric as claimed in one of previous claims wherein a respective ring has a shape selected from a group comprising circular, oval, oblong, tetrahedral and D-shaped.

10. An on-machine-seamable industrial fabric as claimed in one of previous claims wherein a respective ring is made of metal.

11. An on-machine-seamable industrial fabric as claimed in one of claims 1 to 9 wherein a respective ring is made of polymeric resin material selected from a group comprising polyamide, polyester, polyurethane, and polyketone resins.

12. An on-machine-seamable industrial fabric as claimed in one of claims 1 to 9 wherein a respective ring is a type selected from a group comprising monofilament, plied/twisted filaments or braided filaments.

13. An on-machine-seamable industrial fabric as claimed in claim 1 wherein a respective ring is coated with a polymeric resin material.

## Patentansprüche

1. In der Maschine vernähbares Industriegewebe (10), das umfasst:
eine Mehrzahl von Verbindungselementen (3); und
eine Mehrzahl von vorgeformten Ringen (2), die in Maschinenrichtung ausgerichtet sind, wobei jeder Ring zumindest zwei der Verbindungselemente umschließt,
**dadurch gekennzeichnet, dass** sich die Verbindungselemente in schrägen Winkeln in Bezug auf die Maschinenrichtung erstrecken.

2. In der Maschine vernähbares Industriegewebe nach Anspruch 1, wobei die Verbindungselemente aus einer Gruppe ausgewählt sind, die Zapfen, Garne und Drähte umfasst.

3. In der Maschine vernähbares Industriegewebe nach einem der vorstehenden Ansprüche, das eine oder mehrere Gewebeschichten umfassen, um ein Laminat zu bilden.

4. In der Maschine vernähbares Industriegewebe nach einem der vorstehenden Ansprüche, das darüber hinaus zumindest eine Schicht Stapelfasermaterials umfasst, die am Gewebe angehaftet ist.

5. In der Maschine vernähbares Industriegewebe nach einem der vorstehenden Ansprüche, wobei das Gewebe mit einer Polymerbeschichtung beschichtet ist.

6. In der Maschine vernähbares Industriegewebe nach Anspruch 5, wobei die Beschichtung aus einer Gruppe ausgewählt ist, die Polyurethane und Polyamide umfasst.

7. In der Maschine vernähbares Industriegewebe nach Anspruch 1, wobei das Gewebe mit einem Polymerharz imprägniert ist.

8. In der Maschine vernähbares Industriegewebe nach Anspruch 7, wobei das Harz aus einer Gruppe ausgewählt ist, die Polyurethane und Polyamide umfasst.

9. In der Maschine vernähbares Industriegewebe nach einem der vorstehenden Ansprüche, wobei ein jeweiliger Ring eine Form aufweist, die aus einer Gruppe ausgewählt ist, die kreisförmig, oval, länglich, tetrahedral und D-förmig umfasst.

10. In der Maschine vernähbares Industriegewebe nach einem der vorstehenden Ansprüche, wobei ein jeweiliger Ring aus Metall hergestellt ist.

11. In der Maschine vernähbares Industriegewebe nach einem der Ansprüche 1 bis 9, wobei ein jeweiliger Ring aus Polymerharzmaterial hergestellt ist, das aus einer Gruppe ausgewählt ist, die Polyamid-, Polyester-, Polyurethan- und Polyketonharze umfasst.

12. In der Maschine vernähbares Industriegewebe nach einem der Ansprüche 1 bis 9, wobei ein jeweiliger Ring ein Typ ist, der aus einer Gruppe ausgewählt ist, die Monofilament, verzwirnte/gedrehte Filamente oder geflochtene Filamente umfasst.

13. In der Maschine vernähbares Industriegewebe nach Anspruch 1, wobei ein jeweiliger Ring mit einem Polymerharzmaterial beschichtet ist.

## Revendications

1. Tissu industriel apte à la couture sur machine (10), comprenant :
une pluralité d'éléments de jonction (3) ; et
une pluralité d'anneaux préformés (2) orientés dans le sens machine, chaque anneau enfermant au moins deux des éléments de jonction,
**caractérisé en ce que** lesdits éléments de jonction s'étendent selon des angles obliques par rapport audit sens machine.

2. Tissu industriel apte à la couture sur machine selon la revendication 1, dans lequel les éléments de jonction sont choisis dans un groupe comprenant les tiges, les fils et les fils métalliques.

3. Tissu industriel apte à la couture sur machine selon l'une des revendications précédentes, comprenant une ou plusieurs couches de tissu destinées à former un stratifié.

4. Tissu industriel apte à la couture sur machine selon l'une des revendications précédentes, comprenant en outre au moins une couche de matériau de fibre brute attachée audit tissu.

5. Tissu industriel apte à la couture sur machine selon l'une des revendications précédentes, dans lequel ledit tissu est revêtu d'un revêtement polymère.

6. Tissu industriel apte à la couture sur machine selon la revendication 5, dans lequel ledit revêtement est choisi dans un groupe comprenant les polyuréthanes et les polyamides.

7. Tissu industriel apte à la couture sur machine selon la revendication 1, dans lequel ledit revêtement est imprégné d'une résine polymère.

8. Tissu industriel apte à la couture sur machine selon la revendication 7, dans lequel la résine est choisie dans un groupe comprenant les polyuréthanes et les polyamides.

9. Tissu industriel apte à la couture sur machine selon l'une des revendications précédentes, dans lequel chaque anneau a une forme choisie dans un groupe comprenant les formes circulaire, ovale, oblongue, tétraédrique et en D.

10. Tissu industriel apte à la couture sur machine selon l'une des revendications précédentes, dans lequel chaque anneau est en métal.

11. Tissu industriel apte à la couture sur machine selon l'une des revendications 1 à 9, dans lequel chaque anneau est constitué d'un matériau de résine polymère choisi dans un groupe comprenant les résines de polyamide, de polyester, de polyuréthane et de polycétone.

12. Tissu industriel apte à la couture sur machine selon l'une des revendications 1 à 9, dans lequel chaque anneau est d'un type choisi dans un groupe comprenant monofilament, à filaments pliés/torsadés ou à filaments tressés.

13. Tissu industriel apte à la couture sur machine selon la revendication 1, dans lequel chaque anneau est revêtu d'un matériau de résine polymère.
